**Europäisches Patentamt**

**European Patent Office**

**Office européen des brevets**

(19)

(11) Veröffentlichungsnummer: **0 022 147**
**B1**

# (12) EUROPÄISCHE PATENTSCHRIFT

(45) Veröffentlichungstag der Patentschrift:
28.09.83

(21) Anmeldenummer: 80101790.6

(22) Anmeldetag: 03.04.80

(51) Int. Cl.³: **H 04 L 25/38**

(54) Schaltungsanordnung zur automatischen Bitratenerkennung eines flankencodierten Informationssignals.

(30) Priorität: 06.07.79 CH 6328/79

(43) Veröffentlichungstag der Anmeldung:
14.01.81 Patentblatt 81/2

(45) Bekanntmachung des Hinweises auf die Patenterteilung:
28.09.83 Patentblatt 83/39

(84) Benannte Vertragsstaaten:
AT BE DE FR GB IT NL SE

(56) Entgegenhaltungen:
AU-B-464 965
DE-A-1 950 924
DE-A-2 613 428
DE-A-2 817 338
DE-B-1 295 591
GB-A-2 017 457
US-A-3 775 751
US-A-3 961 136
US-A-4 185 273
IBM TECHNICAL DISCLOSURE BULLETIN, Band 14, Nr. 10, März 1972, Seiten 3065—3066 New York, US MITTA: »Transmission Speed Identification Scheme«

(73) Patentinhaber: SIEMENS-ALBIS AKTIENGESELLSCHAFT, EGA1/Verträge und Patente Postfach, CH-8047 Zürich (CH)

(72) Erfinder: Merz, Pierre-André, Rautistrasse 151, CH-8048 Zürich (CH)
Erfinder: Wildhaber, Andreas, Birmensdorferstrasse 316, CH-8055 Zürich (CH)

## Schaltungsanordnung zur automatischen Bitratenerkennung eines flankencodierten Informationssignals

Die vorliegende Erfindung betrifft eine Schaltungsanordnung zur automatischen Bitratenerkennung eines flankencodierten Informationssignals gemäß dem Oberbegriff des Patentanspruches 1.

Aus der DE-OS 1 950 924 ist ein Decodierer für das Decodieren von Datensignalen bekannt, der Signale mit fester oder variabler Bitgeschwindigkeit decodieren kann, wobei diese Signale extreme Schwankungen der Null-Durchgänge aufweisen können. Für das Decodieren der Signale wird eine Verzögerung von einer Bitdauer benutzt. Die Verzögerungszeiten sind über eine frequenzstarre Rückkopplungsschleife variabel, so daß eine Anpassung an Geschwindigkeitsschwankungen während der festen oder variablen Datengeschwindigkeiten möglich ist.

Bei der Übertragung von flankencodierten oder CD-codierten (Conditioned Diphase) Informationssignalen mit zwei verschiedenen Bitraten stellt sich jedoch das Problem, auf einfache Weise zu erkennen, welche der beiden Bitraten gerade übertragen wird, und zwar ohne die Datensignale zu decodieren. Zu diesem Zweck wäre es naheliegend, das Taktsignal von der Sendeseite her über eine zusätzliche Leitung auf die Empfangsseite zu führen, wodurch die Bestimmung der Übertragungsbitrate eindeutig möglich ist.

Die Erfindung zeigt einen Weg, um diese Aufgabe ohne Decodierung der Daten und ohne Verwendung einer zusätzlichen Leitung zu lösen. Dies wird erfindungsgemäß durch die im kennzeichnenden Teil des Anspruches 1 angegebenen Maßnahmen erreicht. Vorteilhafte Ausgestaltungen der Erfindung sind in weiteren Ansprüchen angegeben.

Die Erfindung wird nachfolgend anhand von Zeichnungen beispielsweise näher erläutert. Dabei zeigt

Fig. 1 verschiedene CD-codierte Informationssignale,

Fig. 2 je zwei Codewörter mit zwei verschiedenen Bitraten,

Fig. 3 das Blockschema einer erfindungsgemäßen Schaltungsanordnung zur automatischen Bitratenerkennung eines CD-codierten Informationssignals,

Fig. 4 das Blockschema eines Signalflanken-Detektors zu dieser Schaltungsanordnung,

Fig. 5 das Blockschema einer ersten Ausführung eines Diskriminators zu dieser Schaltungsanordnung und ein Zeitdiagramm für verschiedene Signale,

Fig. 6 das Blockschema einer zweiten Ausführung eines Diskriminators zu dieser Schaltungsanordnung.

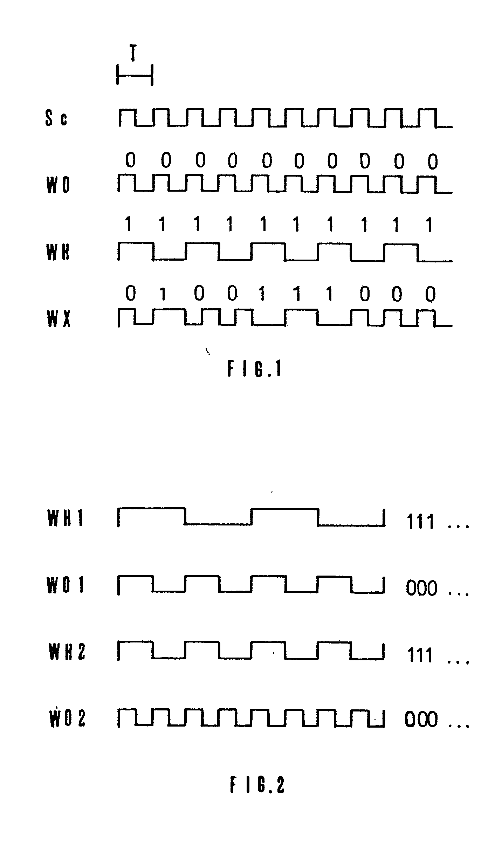

In Fig. 1 sind ein Taktsignal Sc der Periode T, ein Codewort WO = 0000000000, ein Codewort WH = 1111111111 und ein Codewort WX = 0100111000 dargestellt.

Dabei entspricht jede Flanke des Taktsignals Sc einer Flanke des Codewortes WO und jede zweite Flanke des Taktsignals Sc einer Flanke des Codewortes WH. Beim Codewort WO ist die Dauer der Impulse kleiner als $(3/4) \cdot T$, wobei die charakteristische Flanke in der Taktmitte jeweils einer logischen Null entspricht. Beim Codewort WH hingegen ist sowohl die Dauer der Impulse als auch die Dauer der Pausen größer als $(3/4) \cdot T$.

Das Codewort WO stellt daher ein Rechtecksignal dar, dessen Frequenz doppelt so groß ist wie die Frequenz des vom Codewort WH dargestellten Rechtecksignals. Bei den Null-Werten des Codewortes WX stimmen zumindest angenähert die charakteristischen Flanken zeitlich mit den charakteristischen Flanken des Codewortes WO überein.

Fig. 2 zeigt die Codewörter WH = 111 ... und WO1 = 000 ... mit der Bitrate Br1 und die Codewörter WH2 = 111 ... und WO2 = 000 ... mit der Bitrate Br2, wobei Br2 = 2 · Br1 ist. Da die Codewörter WO1 und WH2 sehr ähnlich sind, ist die Bestimmung der Bitrate dieser Codewörter nicht ohne weiteres möglich. Zur Unterscheidung der Bitraten sind beispielsweise die Codewörter WH1 und WO2 maßgeblich.

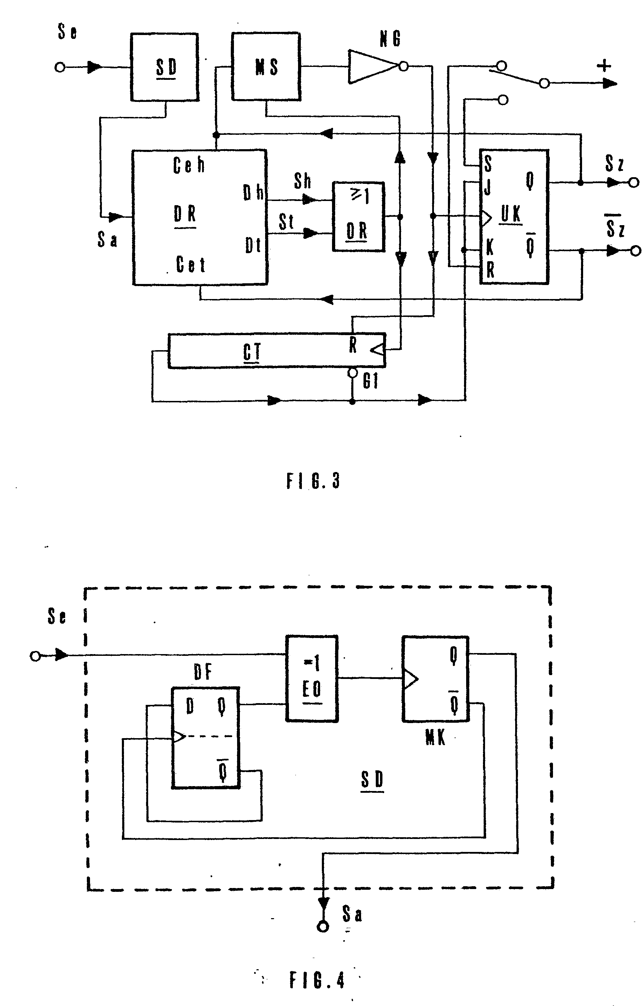

Fig. 3 zeigt das Blockschema einer Schaltungsanordnung zur automatischen Bitratenerkennung eines Informationssignals Se = Se', Se" mit einem einem Signalflanken-Detektor SD nachgeschalteten Diskriminator DR, der einen ersten ein Signal Sh abgebenden Ausgang Dh für die Erkennung der maßgeblichen logischen Null-Zustände der Informationssignale Se" der hohen Bitrate (WO2, Fig. 2) und einen zweiten ein Signal St abgebenden Ausgang Dt für die Erkennung der maßgeblichen logischen Eins-Zustände der Informationssignale Se' der tiefen Bitrate (WH1, Fig. 2) aufweist. Diese zwei Ausgangssignale Sh und St des Diskriminators DR sind über ein ODER-Glied OR zusammengefaßt. Dabei ist der Ausgang des ODER-Gliedes OR sowohl mit dem Takteingang eines Zählers CT als auch mit dem Eingang eines Zeitschalters MS verbunden, dessen Ausgangssignal über ein NICHT-Glied NG einerseits dem R-Eingang des Zählers CT und andererseits dem Takteingang einer als Umschalter arbeitenden JK-Kippstufe UK zugeführt wird.

Der Ausgang des Zählers CT ist mit dem J- und dem K-Eingang der JK-Kippstufe UK und mit dem invertierten Sperr-Eingang G1 des Zählers CT verbunden. Der Q-Ausgang der JK-Kippstufe UK soll ein Zustandssignal Sz = »1« als Kriterium für das Vorhandensein von maßgeblichen Informationssignalen der tiefen Bitrate und der $\overline{Q}$-Ausgang ein Zustandssignal $\overline{Sz}$ = »1« als Kriterium für das Vorhandensein von maßgeblichen Informationssignalen der hohen Bitrate abgeben. Der Diskriminator DR ist über einen Steuereingang Ceh mit dem Zustandssignal Sz und über einen weiteren Steuereingang Cet mit

dem Zustandssignal $\overline{Sz}$ beaufschlagt. Der Zeitschalter MS arbeitet abwechslungsweise mit zwei verschiedenen Zeitkonstanten tp und tq, die jeweils durch das Zustandssignal Sz bestimmt werden.

Durch Einschalten eines »1«-Signals am R-Eingang der JK-Kippstufe UK kann das eine Zustandssignal $\overline{Sz}$ = »1« und durch Einschaltung eines »1«-Signals am S-Eingang das andere Zustandssignal Sz = »1« von Hand simuliert werden.

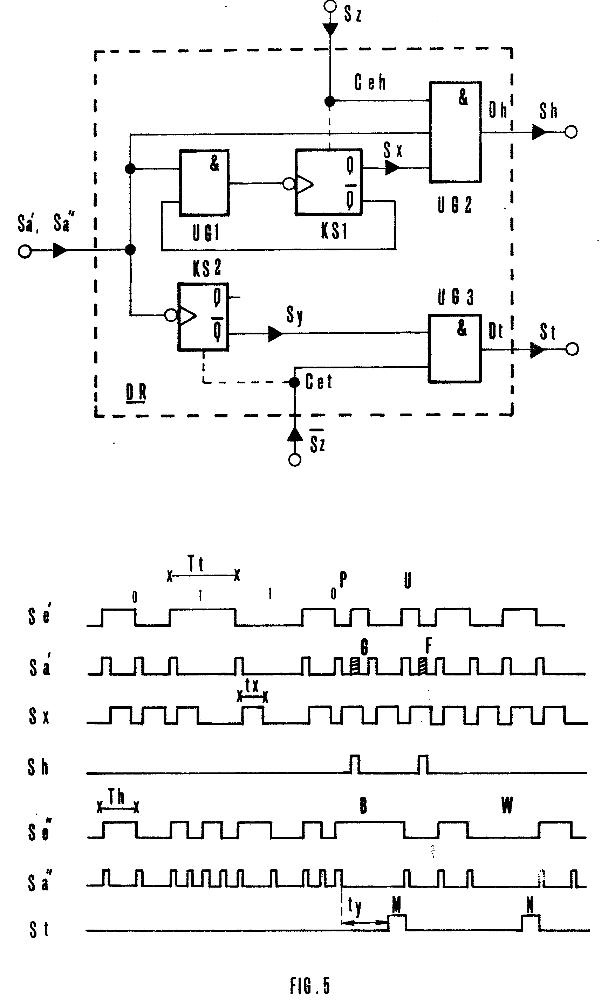

Der in Fig. 4 dargestellte Signalflanken-Detektor SD weist ein Exklusiv-ODER-Glied EO auf, welches das aus Impulsen bestehende Informationssignal Se = Se′, Se″ und das Q-Ausgangssignal eines D-Flip-Flops DF zusammenfaßt, dessen $\overline{Q}$-Ausgang mit dem D-Eingang desselben und dessen Takteingang mit dem $\overline{Q}$-Ausgang einer monostabilen Kippstufe MK verbunden ist. Dabei ist der Ausgang des Exklusiv-ODER-Gliedes EO mit dem Takteingang der Kippstufe MK verbunden, dessen Q-Ausgang ein Ausgangssignal Sa = Sa′, Sa″ liefert.

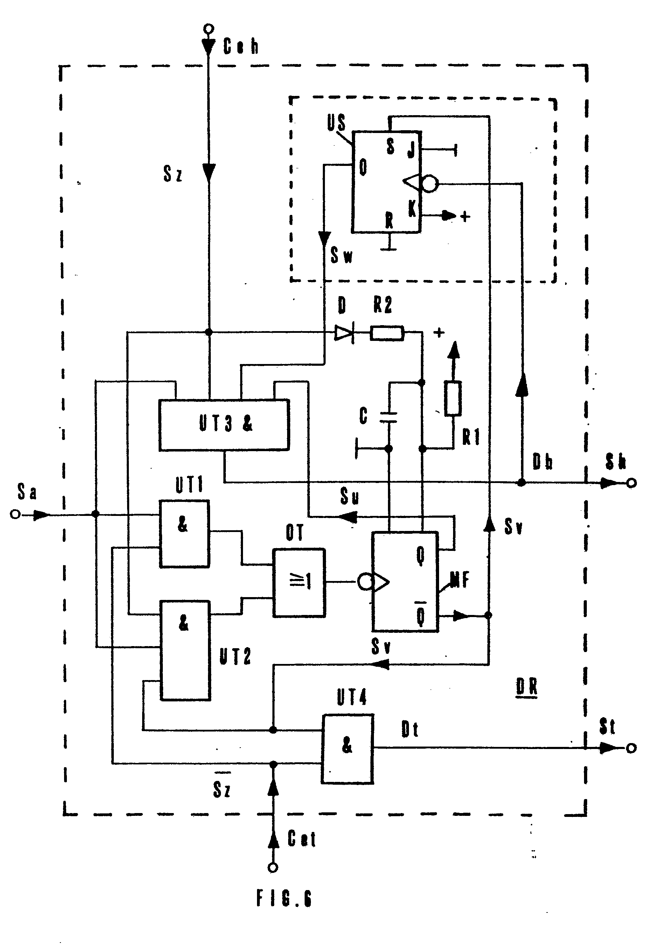

Im Diskriminator DR nach Fig. 5 sind zwei monostabile Kippstufen KS1 und KS2 vorhanden. Der invertierende Takteingang der ersten dieser Kippstufen KS1 ist mit dem Ausgang eines ersten UND-Gliedes UG1 verbunden, dessen erster Eingang mit dem $\overline{Q}$-Ausgang der ersten Kippstufe KS1 und dessen zweiter Eingang mit dem ersten Eingang eines zweiten UND-Gliedes UG2, mit dem invertierenden Takteingang der zweiten Kippstufe KS2 und mit dem das Signal Sa = Sa′, Sa″ abgebenden Ausgang des Signalflanken-Detektors SD (Fig. 3) verbunden ist. Dem zweiten Eingang des zweiten UND-Gliedes UG2 wird das Ausgangssignal Sx aus dem Q-Ausgang der ersten Kippstufe KS1 zugeführt. Der dritte Eingang dieses UND-Gliedes UG2 ist der Steuereingang Ceh des Diskriminators DR. Der ein Signal Sy abgebende $\overline{Q}$-Ausgang der zweiten Kippstufe KS2 ist mit dem einen Eingang eines dritten UND-Gliedes UG3 verbunden, dessen anderer Eingang der Steuereingang Cet des Diskriminators DR ist. Die Ausgänge des zweiten und dritten UND-Gliedes UG2 und UG3 bilden die Ausgänge Dh bzw. Dt des Diskriminators DR.

Die Schaltungsanordnung gemäß Fig. 3 mit dem Signalflanken-Detektor SD nach Fig. 4 und dem Diskriminator DR nach Fig. 5 funktioniert folgendermaßen:

Das Ausgangssignal Sa = (Sa′, Sa″) des Signalflanken-Detektors SD (Fig. 5) besteht aus Impulsen, die mit den Null-Eins-Flanken der Impulse des Informationssignals Se = (Se′, Se″) beginnen und jeweils nach Ablauf einer durch die Kippstufe MK bestimmten Zeit tk enden. Das Ausgangssignal Sa = (Sa′, Sa″) selbst kann auch als eine weitere Form eines flankencodierten Informationssignals betrachtet werden.

Es sei zunächst vorausgesetzt, daß das Ausgangssignal Sz der Schaltungsanordnung den Wert Sz = »1« entsprechend der tiefen Bitrate aufweist. Damit ist einerseits wegen Sz = »1« das UND-Glied UG2 (Fig. 5) durch seinen Steuereingang Ceh oder gegebenenfalls die Kippstufe KS1 durch einen Steuereingang geöffnet und andererseits wegen Sz = »0« das UND-Glied UG3 durch seinen Steuereingang Cet oder gegebenenfalls die Kippstufe KS2 durch einen Steuereingang gesperrt.

Das Signal Sx (Fig. 5) besteht aus Impulsen, deren Null-Eins-Flanken mit den Eins-Null-Flanken der Impulse Sa′ beginnen und jeweils nach einer vorbestimmten Zeit tx enden. Wenn für die Zeiten tk und tx die Beziehung tk ≪ tx gilt und Tt die Periodendauer der tiefen Bitrate ist, kann beispielsweise die Zeit tx derart gewählt werden, daß die Bedingung (1/4) · Tt < tx < (1/2) · Tt erfüllt wird.

Wenn bei den Impulsen Se′ der tiefen Bitrate ein Impuls U (Fig. 5) oder eine Pause P unerwartet vorhanden ist, deren Dauer der der maßgeblichen halben Periodendauer Th der hohen Bitrate entspricht, so erscheint jeweils ein Impuls F oder G bei den abgeleiteten Impulsen Sa′. Diese Impulse F und G gelangen nun über das jetzt geöffnete UND-Glied UG2 als Signal Sh zum Ausgang Dh des Diskriminators DR.

Durch einen ersten Impuls des Signals Sh wird der Zeitschalter MS (Fig. 3) gestartet und durch das »0«-Signal am Ausgang des NICHT-Gliedes NG der Zähler CT freigegeben. Dabei bleibt während der Zeit tp der Takteingang des Umschalters UK im Zustand »0«. Weitere Impulse des Signals Sh werden mit dem Zähler CT gezählt. Ist nach Ablauf der Schaltzeit tp des Zeitschalters MS ein vorbestimmter Zählerstand C des Zählers CT nicht erreicht worden, so wird der Zähler CT durch seinen R-Eingang auf Null gesetzt und der Ablauf kann wieder von neuem beginnen. Dabei wird der Umschalter UK nicht umgeschaltet. Der Zählerstand C kann beispielsweise C = 4 sein.

Ist jedoch vor dem Ablauf der Schaltzeit tp des Zeitschalters MS der Zählerstand C erreicht worden, so wird durch das auf den Wert »1« gesprungene Ausgangssignal des Zählers CT der Zähler CT durch den Sperreingang G1 blockiert und die J- und K-Eingänge des Umschalters UK auf den Zustand »1« gebracht. Dann wird nach Ablauf der Zeit tp durch ein Null-Eins-Flanken-Signal am Takteingang des Umschalters UK dieser auf Sz = »0« umgeschaltet. Dabei kann der Ausgang des Zählers CT nur noch durch ein neues »0«-Signal an seinem R-Eingang wieder auf den Zustand »0« gebracht werden. Da nun ein Signal $\overline{Sz}$ = »1« zum Steuereingang Cet des Diskriminators DR gelangt, wird dieser zur Erkennung der maßgeblichen Zustände »1« der tiefen Bitrate freigegeben. Gleichzeitig ist der Diskriminator DR wegen Sz = »0« für die Erkennung der maßgeblichen Zustände »0« der hohen Bitrate gesperrt.

Der $\overline{Q}$-Ausgang der zweiten Kippstufe KS2 gibt nur dann ein Signal Sy ab, falls für die Zeit ty zwischen zwei nacheinanderfolgenden Impulsen an seinem Eingang die Bedingung gilt: Th < ty < 2 · Th, worin Th die Periodendauer der hohen Bitrate ist.

Wenn bei den Impulsen Se'' der hohen Bitrate ein Impuls B (Fig. 5) oder eine Pause W unerwartet vorhanden ist, deren Dauer der der maßgeblichen Periodendauer Tt der tiefen Bitrate entspricht, so entsteht jeweils eine Lücke ohne einen erwarteten Impuls bei den abgeleiteten Impulsen Sa'' und das Signal Sy besteht dann aus den Impulsen M oder N, die auf einen maßgeblichen Zustand »1« der tiefen Bitrate gemäß WH1 in Fig. 2 hinweisen. Durch einen Impuls M oder N wird der Zeitschalter MS (Fig. 3) gestartet. Dadurch wird der Zähler CT freigegeben und weitere maßgebliche Einsen der tiefen Bitrate werden mit dem Zähler gezählt.

Ist nach Ablauf der Schaltzeit tq des Zeitschalters MS ein vorbestimmter Zählerstand C des Zählers CT nicht erreicht, wird der Zähler CT durch seinen R-Eingang auf Null gesetzt, der Umschalter UK wird nicht umgeschaltet und der Ablauf kann wieder von neuem beginnen.

Ist jedoch vor Ablauf der Schaltzeit tq des Zeitschalters MS der Zählerstand C erreicht, so wird der Zähler CT durch den Sperreingang G1 blockiert und der Umschalter UK auf Sz = »1« umgeschaltet. Da nun ein Signal Sz = »1« zum Steuereingang Ceh des Diskriminators DR gelangt, wird dieser zur Erkennung der maßgeblichen Zustände »0« der hohen Bitrate freigegeben. Gleichzeitig ist der Diskriminator DR wegen $\overline{Sz}$ = »0« wieder für die Erkennung der maßgeblichen Zustände »1« der tiefen Bitrate gesperrt.

Der Diskriminator DR gemäß Fig. 6 weist zwei UND-Tore UT1 und UT2 auf, deren Ausgangssignale über ein ODER-Tor OT zusammengefaßt und dem invertierten Takteingang einer monostabilen Kippstufe MF zugeführt werden. Dabei ist der erste Eingang des UND-Tores UT1 mit je einem ersten Eingang des UND-Tores UT2 und eines dritten UND-Tores UT3 sowie mit dem Ausgang des Signalflanken-Detektors SD (Fig. 3) verbunden. Der zweite Eingang des ersten UND-Tores UT1 und der erste Eingang eines vierten UND-Tores UT4 sind gemeinsam an den Steuereingang Cet und je ein zweiter Eingang der UND-Tore UT2 und UT3 sind gemeinsam an den Steuereingang Ceh des Diskriminators angeschlossen. Das $\overline{Q}$-Ausgangssignal Sv der monostabilen Kippstufe MF wird je einem weiteren Eingang der Tore UT2 und UT4 und das Q-Ausgangssignal Su derselben dem dritten Eingang des UND-Tores UT3 zugeführt. Die Ausgänge der Tore UT3 und UT4 bilden auch die Ausgänge Dh bzw. Dt des Diskriminators DR.

Die monostabile Kippstufe MF weist für die Bestimmung der Zeitkonstante einen weiteren Eingang auf, welcher über einen Kondensator C an ein Bezugspotential, über einen Widerstand R1 an eine Referenzspannung und über die Reihenschaltung eines Widerstandes R2 und einer Diode D an den Steuereingang Ceh angeschlossen ist. So arbeitet die Kippstufe MF abwechslungsweise mit zwei Zeitkonstanten tg und tj, je nachdem, ob Sz = »1« oder Sz = »0« ist.

Der Diskriminator DR gemäß Fig. 6 weist außerdem eine als Umschalter arbeitende JK-Kippstufe US auf, deren invertierter Takteingang mit dem Signal Sh, deren K-Eingang mit einem »1«-Signal beaufschlagt, deren S-Eingang mit dem $\overline{Q}$-Ausgang der Kippstufe MF und deren ein Signal Sw abgebender Q-Ausgang mit dem vierten Eingang des UND-Tores UT3 verbunden ist.

Der Diskriminator DR nach Fig. 6 funktioniert folgendermaßen:

Falls, um das Informationssignal Se' der tiefen Bitrate zu überwachen, das Signal am Steuereingang Ceh den Wert Sz = »1« und das Signal am Steuereingang Cet den Wert $\overline{Sz}$ = »0« aufweist, sind die UND-Tore UT1 und UT4 gesperrt, wodurch das Q-Ausgangssignal Su der monostabilen Kippstufe MF sich für Sw = »1« wie das Signal Sx im Diskriminator DR nach Fig. 5 verhält. In diesem Fall arbeitet die Kippstufe MF mit der kleinen Zeitkonstante tg. Es kann somit unerwartet ein maßgeblicher Zustand »0« entsprechend den Informationssignalen Se'' der hohen Bitrate gemäß WO2 in Fig. 2 erkannt werden, indem ein Impuls Sh erscheint.

Falls, um das Informationssignal Se'' der hohen Bitrate zu überwachen, das Signal am Steuereingang Ceh den Wert Sz = »0« und das Signal am Steuereingang Cet den Wert $\overline{Sz}$ = »1« aufweist, sind die UND-Tore UT2 und UT3 gesperrt, wodurch das $\overline{Q}$-Ausgangssignal Sv der Kippstufe MF sich wie das Signal Sy im Diskriminator DR nach Fig. 3 verhält. In diesem Fall arbeitet die Kippstufe MF mit der großen Zeitkonstante tj. Es kann somit unerwartet ein maßgeblicher Zustand »1« entsprechend den Informationssignalen Se' der tiefen Bitrate gemäß WH1 in Fig. 2 erkannt werden, indem ein Impuls St erscheint.

Die Kippstufe US stellt eine Schaltung zur Störunterdrückung dar, deren Ausgang sich im Zustand Sw = »1« befindet, ausgenommen während der Zeit zwischen der Eins-Null-Flanke des Taktsignals Sh und der Null-Eins-Flanke des S-Signals Sv. Etwaige Störimpulse, die während dieser Zeit beispielsweise über die Leitung einwirken könnten, werden daher durch das wegen Sw = »0« gesperrte UND-Tor UT3 unterdrückt. Wenn die Gefahr, solche Störimpulse zu empfangen, nicht gegeben ist, kann die Kippstufe US entfallen, wobei dann das Tor UT3 ein UND-Tor mit nur drei Eingängen sein muß.

Die Ausgänge Dh und Dt des Diskriminators DR könnten selbstverständlich auch je mit dem Takteingang eines Zählers und dem Eingang eines Zeitschalters verbunden sein, wobei dann der Ausgang des einen Zählers über den Steuereingang Ceh und der Ausgang des anderen Zählers über den Steuereingang Cet den Diskriminator steuern müßte. In diesem Fall könnten zwei einfache Zeitschalter MS1 und MS2 verwendet werden, die dann nicht mit zwei umschaltbaren Zeitkonstanten arbeiten müßten.

Für den umschaltbaren Zeitschalter MS gemäß Fig. 3 kann eine Schaltung mit zwei Widerständen R1, R2, einem Kondensator C und einer Diode D nach Fig. 6 verwendet werden. Wenn zudem ein invertierter Ausgang des Zeitschalters MS verwendet wird, kann das NICHT-Glied NG entfallen.

Der Zeitschalter MS (Fig. 3) kann auch mit einer Zeitkonstante arbeiten, so daß die Zeitkonstanten tp und tq gleich sind. In diesem Fall entfällt die Verbindung zwischen einem Eingang des Zeitschalters MS und dem Q-Ausgang des Umschalters UK.

**Patentansprüche**

1. Schaltungsanordnung zur automatischen Bitratenerkennung eines flankencodierten Informationssignals, das mit zwei verschiedenen Bitraten ankommen kann, von denen eine doppelt so groß wie die andere ist, dadurch gekennzeichnet, daß ein Diskriminator (DR, Fig. 5 oder Fig. 6) vorhanden ist, der mindestens ein mit den flankencodierten Informationssignalen (Sa', Sa'') beaufschlagtes Zeitglied (KS1, KS2 oder MF) aufweist, welches einerseits zur Überwachung eines Informationssignals (Sa') der tiefen Bitrate von neu eintreffenden Impulsen gestartet wird und nach einer ersten vorbestimmten Zeit (tx) zurückkippt, wobei Impulse (G, F), die während dieser ersten vorbestimmten Zeit (tx) unerwartet eintreffen, über ein Verknüpfungsglied (UG2) ausgefiltert und als Kriterium (Sh) für das Vorhandensein von maßgeblichen Informationssignalen der hohen Bitrate (Sa'') zum ersten Ausgang (Dh) des Diskriminators gelangen, und welches andererseits zur Überwachung eines Informationssignals (Sa'') der hohen Bitrate jeweils nach einer zweiten vorbestimmten Zeit (ty) nach dem Eintreffen eines Impulses, sofern während dieser zweiten vorbestimmten Zeit (ty) kein erwarteter neuer Impuls eintrifft, gestartet wird und nach Eintreffen eines späteren Impulses zurückkippt, wobei Impulse (M, N) entstehen, die als Kriterium (St) für das Vorhandensein von maßgeblichen Informationssignalen der tiefen Bitrate (Sa') zum zweiten Ausgang (Dt) des Diskriminators (DR) gelangen.

2. Schaltungsanordnung nach Patentanspruch 1, dadurch gekennzeichnet, daß mindestens ein Ausgang (Dh, Dt, Fig. 3) des Diskriminators (DR) mit einem Zähler (CT) verbunden ist, wobei, wenn vor dem Ablauf der Schaltzeit (tp, tq) eines Zeitschalters (MS) der Zähler (CT) einen vorbestimmten Zählerstand (C) erreicht hat, ein dem Zähler nachgeschalteter Umschalter (UK) den Diskriminator (DR) über einen Steuereingang (Ceh, Cet) zur Überwachung der maßgeblichen Zustände der anderen Bitrate umschaltet.

3. Schaltungsanordnung nach den Patentansprüchen 1 und 2, dadurch gekennzeichnet, daß die zwei Ausgangssignale (Sh, St) des Diskriminators (DR) über ein ODER-Glied (OR) zusammengefaßt sind, ferner daß der Ausgang des ODER-Gliedes (OR) sowohl mit dem Takteingang des Zählers (CT) als auch mit dem Eingang eines Zeitschalters (MS) verbunden ist, dessen Ausgangssignal einerseits einem Steuereingang des Zählers (CT) und andererseits dem Takteingang eines Umschalters (UK) zugeführt wird, wobei der Ausgang des Zählers (CT) mit einem Sperr-Eingang (G1) desselben und mit mindestens einem Steuereingang des Umschalters (UK) verbunden ist, dessen Ausgang ein erstes Zustandssignal (Sz=»1«) als Kriterium für das Vorhandensein von maßgeblichen Informationssignalen der tiefen Bitrate oder ein zweites Zustandssignal (Sz=»0«) als Kriterium für das Vorhandensein von maßgeblichen Informationssignalen der hohen Bitrate abgibt, und daß der Diskriminator (DR) über mindestens einen Steuereingang (Ceh, Cet) mit einem dieser Zustandssignale (Sz=»1«, Sz=»0«) beaufschlagt ist.

4. Schaltungsanordnung nach Patentanspruch 1 oder 3, dadurch gekennzeichnet, daß der Diskriminator (DR, Fig. 5) eine erste monostabile Kippstufe (KS1) aufweist, deren invertierender Takteingang mit dem Ausgang eines ersten UND-Gliedes (UG1) verbunden ist, dessen erster Eingang mit dem invertierten Ausgang dieser Kippstufe (KS1) und dessen zweiter Eingang mit dem ersten Eingang eines zweiten UND-Gliedes (UG2) und mit invertierenden Takteingang einer zweiten monostabilen Kippstufe (KS2) verbunden und mit den flankencodierten Informationssignalen (Sa) beaufschlagt ist, wobei das Ausgangssignal (Sx) der ersten Kippstufe (KS1) dem zweiten Eingang des zweiten UND-Gliedes (UG2) zugeführt wird, dessen Ausgang bei der Überwachung von Informationssignalen der tiefen Bitrate ein Signal (Sh) für die Erkennung eines maßgeblichen logischen Null-Zustandes der hohen Bitrate abgibt, und daß bei der Überwachung von Informationssignalen der hohen Bitrate die zweite Kippstufe (KS2) ein Signal (St) für die Erkennung eines maßgeblichen logischen Eins-Zustandes der tiefen Bitrate abgibt.

5. Schaltungsanordnung nach Patentanspruch 1 oder 3, dadurch gekennzeichnet, daß der Diskriminator (DR, Fig. 6) zwei UND-Tore (UT1, UT2) aufweist, deren Ausgangssignale über ein ODER-Tor (OT) zusammengefaßt und dem invertierenden Takteingang einer monostabilen Kippstufe (MF) zugeführt werden, wobei der erste Eingang des ersten UND-Tores (UT1) mit je einem ersten Eingang des zweiten UND-Tores (UT2) und eines dritten UND-Tores (UT3) verbunden und mit den flankencodierten Informationssignalen (Sa) beaufschlagt ist, weiter, daß der zweite Eingang des ersten UND-Tores (UT1) und der erste Eingang eines vierten UND-Tores (UT4) gemeinsam an den einen Steuereingang (Cet) und je ein zweiter Eingang der zweiten und dritten UND-Tore (UT2, UT3) gemeinsam an den anderen Steuereingang (Ceh) des Diskriminators (DR) angeschlossen sind, ferner daß das invertierte Ausgangssignal (Sv) der monostabilen Kippstufe (MF) je einem weiteren Eingang des zweiten und vierten UND-Tores (UT2, UT4) und das Ausgangssignal (Su) derselben dem dritten Eingang des dritten UND-Tores (UT3) zugeführt werden, wobei die Ausgänge der dritten und vierten UND-Tore (UT3, UT4) auch die Ausgänge (Dh bzw. Dt) des Disktriminators (DR) sind, und daß die monostabile Kippstufe (MF) einen weiteren Eingang zur Bestimmung ihrer Zeitkonstante aufweist, derart, daß die monostabile Kippstufe (MF) abwechslungsweise mit zwei Zeitkonstanten (tg, tj) arbeitet, je nachdem, ob der eine oder der andere Steuereingang (Cet bzw. Ceh) geöffnet (Sz = »1«) ist.

6. Schaltungsanordnung nach Patentanspruch 5, dadurch gekennzeichnet, daß zur Unterdrückung von etwaigen Störimpulsen der Diskriminator (DR, Fig. 6) zusätzlich eine JK-Kippstufe (US) aufweist, deren invertierter Takteingang mit dem Ausgang des dritten UND-Tores (UT3), deren S-Eingang mit dem invertierten Ausgang der monostabilen Kippstufe (MF) und deren Ausgang mit einem vierten Eingang des dritten UND-Tores (UT3) verbunden und deren K-Eingang mit einem »1«-Wert-Signal beaufschlagt ist.

7. Schaltungsanordnung nach einem der vorangehenden Patentansprüche, dadurch gekennzeichnet, daß dem Diskriminator (DR) ein Signalflanken-Detektor (SD, Fig. 4) vorgeschaltet ist, der ein Exklusiv-ODER-Glied (EO) aufweist, welches bei Vorliegen eines CD-codierten Informationssignals (Se) dieses Signal und das Ausgangssignal eines D-Flip-Flops (DF) zusammenfaßt, dessen invertierter Ausgang mit seinem D-Eingang und dessen Takteingang mit dem invertierten Ausgang einer monostabilen Kippstufe (MK) verbunden ist, wobei der Ausgang des Exklusiv-ODER-Gliedes (EO) mit dem Takteingang der monostabilen Kippstufe (MK) verbunden ist, deren nichtinvertierender Ausgang das Ausgangssignal (Sa) liefert.

## Claims

1. A circuit arrangement for the automatic bit rate recognition of an edge-coded information signal which can arrive with two different bit rates, one twice as high as the other, characterised in that a discriminator (DR, Fig. 5 or Fig. 6) is provided which possesses at least one time element (KS1, KS2 or MF) to which is supplied the edge-coded information signal (S', Sa") and which on the one hand is triggered by new incoming pulses to monitor for an information signal (Sa") of the low bit rate and flops back after a first predetermined time (tx) any pulses (G, F) arriving unexpectedly during this first predetermined time (tx) being filtered out via a linking element (UG2) and fed to the first output (Dh) of the discriminator as a criterion (Sh) for the presence of determining information signals of the high bit rate (Sa"), and which time element is triggered after a second predetermined time (ty) following the arrival of a pulse, on the other hand, in order to monitor for an information signal (Sa") of the high bit rate, provided that no expected new pulse arrives during this second predetermined time (ty), and flops back after a later pulse has arrived, where pulses (M, N) are produced which are fed to the second output (Dt) of the discriminator (DR) as a criterion (St) for the presence of determining information signals of the low bit rate (Sa').

2. A circuit arrangement as claimed in Claim 1, characterised in that at least one output (Dh, Dt, Fig. 3) of the discriminator (DR) is connected to a counter (CT), and if the counter (CT) has reached a predetermined counter reading (C) before the expiration of the switching time (tp, tq) of a time switch (MS), a change-over switch (UK) connected following the counter switches over the discriminator (DR) by means of a control input (Ceh, Cet) in order to monitor the determining states of the other bit rate.

3. A circuit arrangement as claimed in Claims 1 and 2, characterised in that the two output signals (Sh, St) of the discriminator (DR) are combined by means of an OR-element (OR), and that the output of the OR-element (OR) is connected both to the clock pulse input of the counter (CT) and to the input of a time switch (MS) whose output signal is fed to a control input of the counter (CT) on the one hand and to the clock pulse input of a change-over switch (UK) on the other hand, where the output of the counter (CT) is connected to a blocking input (G1) of the latter and to at least one control input of the change-over switch (UK), whose output emits a first status signal (Sz = »1«) as a criterion for the presence of determining information signals of the low bit rate or a second status signal (Sz = »0«) as a criterion for the presence of determining information signals of the high bit rate, and that the discriminator (DR) is fed with one of these status signals (Sz = »1«, Sz = »0«) by means of at least one control input (Ceh, Cet).

4. A circuit arrangement as claimed in Claim 1 or 3, characterised in that the discriminator (DR, Fig. 5) possesses a first monostable flip-flop (KS1), whose inverting clock pulse input is connected to the output of a first AND-element (UG1), whose first input is connected to the inverting output of this flip-flop (KS1) and whose second input is connected to the first input of a second AND-element (UG2) and to the inverting clock pulse input of a second monostable flip-flop (KS2) and is supplied with the edge-coded information signals (Sa), where the output signal (Sx) of the first flip-flop (KS1) is fed to the second input of the second AND-element (UG2), whose output emits a signal (Sh) for the recognition of a determining logic zero-state of the high bit rate during monitoring of information signals of the low bit rate, and that during monitoring of information signals of the high bit rate, the second flip-flop (KS2) emits a signal (St) for the recognition of a determining logic one-state of the low bit rate.

5. A circuit arrangement as claimed in Claim 1 or 3, characterised in that the discriminator (DR, Fig. 6) possesses two AND-gates (UT1, UT2) whose output signals are combined by means of an OR-gate (OT) and fed to the inverting clock pulse input of a monostable flip-flop (MF), where the first input of the first AND-gate (UT1) is connected to the first input of the second AND-gate (UT2) and to a third AND-gate (UT3) and is supplied with the edge-coded information signals (Sa), and that the second input of the first AND-gate (UT1) and the first input of a fourth AND-gate (UT4) are commonly connected to the one control input (Cet) and a second input of the second and third AND-gate (UT2, UT3) respectively is commonly connected to the other control input (Ceh) of the discriminator (DR), and that the inverting output signal (Sv) of the monostable flip-flop (MF) is fed to a further input of the second and fourth AND-gate (UT2, UT4) respectively, and the output signal (Su) of said monostable flip-flop is fed to the third input of the third AND-gate (UT3), where the outputs of the third and fourth AND-gate (UT3, UT4) are also the outputs (Dh and Dt) of the discriminator (DR), and that the monostable flip-flip (MF) has a further input for determining its time constant in such manner, that the monostable flip-flop (MF) operates alternately with two time constants (tg, tj) depending on whether the one or the other control input (Cet or Ceh) is open (Sz = »1«).

6. A circuit arrangement as claimed in Claim 5, characterised in that in order to suppress possible interference pulses the discriminator (DR, Fig. 6) additionally possesses a JK-flip-flop (US) which has its inverting clock pulse input connected to the output of the third AND-gate (UT3), its S-input connected to the inverting output of the monostable flip-flop (MF) its output connected to a fourth input of the third AND-gate (UT3), and its K-input supplied with a »1«-value-signal.

7. A circuit arrangement as claimed in one of the preceding Claims, characterised in that a signal edge detector (SD, Fig. 4) is connected preceding the discriminator (DR), which signal edge detector possesses an exclusive OR-element (EO) which, when a CD-coded information signal (Se) is present, combines this signal and the output signal of a D-type flip-flop (DF), whose inverting output is connected to its D-input and whose clock pulse input is connected to the inverting output of a monostable flip-flop (MK), where the output of the exclusive OR-element (EO) is connected to the clock pulse input of the monostable flip-flop (MK), whose non-inverting output supplies the output signal (Sa).

**Revendications**

1. Montage pour l'identification automatique du débit binaire d'un signal d'information codé au niveau de ses flancs qui peut arriver avec deux débits binaires différents, dont l'un est le double de l'autre, caractérisé en ce qu'il est prévu un discriminateur (DR, figure 5 ou figure 6) qui possède au moins un organe de temporisation (KS1, KS2 ou MF) chargé par les signaux d'information (Sa', Sa'') codés au niveau des flancs, et qui est active d'une part pour le contrôle d'un signal d'information (Sa') présentant le débit binaire faible, par de nouvelles impulsions apparaissantes et est basculé en retour au bout d'une première durée prédéterminée (tx), des impulsions (G, F) qui arrivent de façon inattendue pendant cette première durée prédéterminée (tx), étant éliminées par filtrage par l'intermédiaire d'un organe de combinaison logique (UG2) et parvenant, en tant que critère (Sh) de la présence de signaux d'information déterminants présentant le débit binaire élevé (Sa''), à la première sortie (Dh) du discriminateur, et qui d'autre part est mis en marche pour le contrôle d'un signal d'information (Sa'') présentant le débit binaire élevé respectivement après une seconde durée prédéterminée (ty) après l'arrivée d'une impulsion, dans la mesure où aucune nouvelle impulsion inattendue n'apparaît pendant cette seconde durée prédéterminée (ty) et est basculé en retour après l'arrivée d'une impulsion ultérieure, alors qu'il se produit l'apparition d'impulsions (M, N) qui parviennent en tant que critère (St) de la présence de signaux d'information déterminants présentant le débit binaire faible (Sa'), à la seconde sortie (Dt) du discriminateur (DR).

2. Montage selon la revendication 1, caractérisé par le fait qu'au moins une sortie (Dh, Dt, figure 3) du discriminateur (DR) est reliée à un compteur (CT) et que, lorsqu'avant l'écoulement de la durée de commande (tp, tq) d'un circuit de temporisation (MS), le compteur (CT) a atteint un état prédéterminé (C), un inverseur (UK) branché en aval du compteur commute le discriminateur (DR) par l'intermédiaire d'une entrée de commande (Ceh, Cet) pour le contrôle des états déterminants correspondant à l'autre débit binaire.

3. Montage selon les revendication 1 et 2, caractérisé par le fait que les deux signaux de sortie (Sh, St) du discriminateur (DR) sont réunis par l'intermédiaire d'un circuit OU (OR), qu'en outre la sortie du circuit OU (OR) est reliée aussi bien à l'entrée de cadence du compteur (CT) qu'à l'entrée d'un circuit de temporisation (MS), dont le signal de sortie est envoyé d'une part à une entrée de commande du compteur (CT) et d'autre part à l'entrée de cadence d'un inverseur (UK), la sortie du compteur (CT) étant reliée à une entrée de blocage (G1) de lui-même et à au moins une entrée de commande de l'inverseur (UK) dont la sortie délivre un premier signal d'état (Sz = »1«) en tant que critère de la présence de signaux d'information déterminants correspondant au débit binaire faible ou un second signal d'état (Sz = »0«) comme critère de la présence de signaux d'informations déterminants correspondant au débit binaire élevé, et que le discriminateur (DR) est chargé par l'intermédiaire d'au moins une entrée de commande (Ceh, Cet) par l'un de ces signaux d'état (Sz = »1«, Sz = »0«).

4. Montage selon la revendication 1 ou 3, caractérisé par le fait que le discriminateur (DR, figure 5) possède un premier étage à bascule monostable (KS1), dont l'entrée de cadence inverseuse est reliée à la sortie d'un premier circuit ET (UG1), dont la première entrée est raccordée à l'entrée inversée de cet étage à bascule (KS1) et dont la seconde entrée est reliée à la première entrée du second circuit ET (UG2) et à l'entrée de cadence inverseuse d'un second étage à bascule monostable (KS2) et est chargée par les signaux d'information (Sa) codés au niveau des leurs flancs, le signal de sortie (Sx) du premier étage à bascule (KS1) étant envoyé à la seconde entrée du second circuit ET (UG2) dont la sortie délivre, lors du contrôle de signaux d'information correspondant au débit binaire faible, un signal (Sh) pour l'identification d'un état zéro logique déterminant correspondant au débit binaire élevé, et que lors du contrôle de signaux d'information présentant le débit binaire élevé, le second étage à bascule (KS2) délivre un signal (St) pour l'identification d'un état un logique déterminant correspondant au débit binaire faible.

5. Montage selon la revendication 1 ou 3, caractérisé par le fait que le discriminateur (DR, figure 6) comporte deux portes ET (UT1, UT2) dont les signaux de sortie sont réunis par l'intermédiaire d'une porte OU (OT) et sont envoyés à l'entrée de cadence inverseuse d'un étage à bascule monostable (MF), la première entrée de la première porte ET (UT1) étant reliée à respectivement une première entrée d'une seconde porte ET (UT2) et d'une troisième porte ET (UT3) et étant chargée par des signaux d'information (St) codés au niveau de leurs flancs, et qu'en outre la seconde entrée de la première porte ET (UT1) et la première entrée d'une quatrième porte ET(UT4) sont raccordées en commun à une entrée de commande (Cet), et que des secondes entrées respectives de la seconde et de la troisième portes ET (UT2, UT3) sont raccordées en commun à l'autre entrée de commande (Ceh) du discriminateur (DR), qu'en outre le signal de sortie inversé (Sv) de l'étage à bascule monostable (MF) est envoyé à une autre entrée respective des seconde et quatrième portes ET (UT2, UT4) et que le signal de sortie (Su) de cet étage à bascule est envoyé à la troisième entrée de la troisième porte ET (UT3), les sorties de la troisième et de la quatrième portes ET (UT3, UT4) étant également les sorties (Dh ou Dt) du discriminateur (DR), et que l'étage à bascule monostable (MF) comporte une autre entrée pour la détermination de la constante de temps de telle sorte que l'étage à bascule monostable (MF) fonctionne alternativement avec deux constantes de temps (tg, tj), selon que l'une ou l'autre entrée de commande (Cet ou Ceh) est ouverte (Sz = »1«).

6. Montage selon la revendication 5, caractérisé par le fait que pour la suppression d'éventuelles impulsions parasites, le discriminateur (DR, figure 6) comporte en outre un étage à bascule bistable de type JK (US), dont l'entrée de cadence inversée est reliée à la sortie de la troisième porte ET (UT3) et dont l'entrée S est reliée à la sortie inversée de l'étage à bascule monostable (MF) et dont la sortie est reliée à une quatrième entrée de la troisième porte ET (UT3) et dont la sortie K est chargée par un signal de valeur »1«.

7. Montage selon l'une des revendications précédente, caractérisé par le fait qu'en amont du discriminateur (DR) est branché un détecteur de flancs de signaux (SD, figure 4), qui comporte une porte OU-Exclusif (EO) qui lors de la présence d'un signal d'information (Se) à codage CD, réunit ce signal et le signal de sortie d'une bascule bistable de type D (DF) dont la sortie inversée est reliée à son entrée D et dont l'entrée de cadence est reliée à la sortie inversée d'un étage à bascule monostable (MK), la sortie du circuit OU-Exclusif (EO) étant reliée à l'entrée de cadence de l'étage à bascule monostable (MK), dont l'entrée non inverseuse délivre le signal de sortie (Sa).

FIG.1

FIG.2

FIG. 3

FIG. 4

FIG.5

13

FIG.6